# EUROPEAN PATENT APPLICATION

(11) **EP 1 720 325 A1**
(43) Date of publication of application: **08.11.2006**
(21) Application number: 05009707.0
(22) Date of filing: 03.05.2005
(51) Int. Cl.: H04M 1/02

(54) **A portable electronic device**

(71) Applicant: SIEMENS AKTIENGESELLSCHAFT, 80333 München (DE)
(72) Inventor: Kjeldsen, Soren, 8830 Tjele (DK); Sorensen, Svend Erik, 9200 Aalborg SV (DK)

(57) **Abstract**

A portable electronic device (100) comprises a top part (100T), a bottom part (100B), and a drive unit (300: 301-311) adapted to move the top part (100T) along the bottom part (100B) between a first position and a second position, the first position covering an input section (103), the second position making the input section (103) accessible for a user.

## Description

### Field of the invention

The invention relates to portable electronic devices comprising a top part and a bottom part.

### Background art

The market for different kinds of portable electronic devices, especially portable telephones, has grown extensively during the last decade. Many different aspects have contributed to this, such as recent developments in materials science and energy technology. Some relatively new polymer-based materials, for example, improve the comfort of use while still being durable enough and easy and cheap to manufacture. New electrochemical energy cells, such as rechargeable batteries, on the other hand, have improved the standby time available, and developments in microelectronics have reduced energy consumption of different components for a given performance, thereby increasing the design possibilities available for a design engineer being faced with a task of designing a portable electronic device.

Portable telephones, as a particular example of portable electronic devices, are nowadays offered on the market in many different designs. Clam-shell telephones that can be brought to a use position by tilting an upper part out from a lower part, and slider telephones that can be brought to a use position by sliding an upper part along a bottom part have both turned out to be of particular interest among customers, especially among those who want to show that they follow time. To be successful on such a market, it is necessary to continuously provide portable telephones with new features.

Some users have experienced problems in using portable electronic devices that comprise a top part and a bottom part that is brought to a use position by sliding the upper part along the bottom part. Especially if the user is a bit clumsy, or if the portable electronic device is very small, it may be difficult to slide the top part along the bottom part, such as in order to open or to close the portable electronic device. This problem has been encountered in the field of portable telephones, especially when the portable telephone has been of a relatively small size or of a relatively small thickness. Since most portable telephones of the slider type comprise a keypad that is accessible only after the telephone is in an "open" position, the design of the mechanism how the top part can be moven on the bottom part is a crucial feature contributing to user comfort.

### Summary of the invention

It is an object of the invention to ease the changing a portable electronic device comprising a top part and a bottom part between a first position and a second position, the first position covering an input section and the second position making the input section accessible for the user. This object can be achieved as set out in claim 1.

Dependent claims describe various advantageous embodiments of the invention.

### Advantages of the invention

If a portable electronic device comprising a top part and a bottom part further comprises a drive unit adapted to move the top part along the bottom part between a first position and a second position, the first position covering an input section, the second position making the input section accessible for a user, changing the portable electronic device between the first and the second position can be made less dependent of the skills of the user.

If the drive unit comprises a motor adapted to generate rotational movement, and a conversion unit adapted to convert said rotational movement to a directional movement of the top part in relation to the bottom part, a practical way to assist the changing between the first and the second position can be achieved.

If the conversion unit is connected to the motor via a gear, the movement of the top part can be made smoother even with a relatively weak or small motor.

If the conversion unit comprises a rotatable guiding member and a counterpart member, the counterpart member adapted to transform rotational movement of the rotatable guiding member to a directional movement of the counterpart member, the assembly of the portable electronic device may be made simpler. Furthermore, it may be easier to replace the top part since the counterpart member does not necessarily need to be removed.

If the rotatable guiding member comprises a winding, the interaction between the counterpart member and rotatable guiding member can be made very simple. In this manner, construction of the conversion unit can be simplified. The rotatable guiding member can then be constructed of a screw, for example.

If the rotatable guiding member is not self-locking, the top part can also be moved also by hand without using the drive unit.

If the drive unit is placed at the bottom part under the top part, the top part can protect the drive unit against dust and dirt thus helping to avoid any need for maintenance. Furthermore, if the portable electronic device further comprises a circuit board in the bottom part, the drive unit fixed on said circuit board, and a display in the top part, the display adapted to leave an opening to the circuit board to accommodate the drive unit, the drive unit can be fixed properly and hidden under the display.

If said motor is adapted to obtain its operating power from a replaceable energy source adapted to give operating power for said portable electronic device, a simple way to get operating power also for the motor can be obtained, and any additional power source can be conveniently avoided.

If the portable electronic device further comprises an activation switch adapted to activate the drive unit to move the top part from the first position to the second position or from the second position to the first position, a still more user-friendly way to change the position of the top part to the bottom part between the first position and the second position can be achieved.

If the portable electronic device is a portable telephone, it may further be adapted to initiate a telephone call or end an ongoing telephone call when the activation switch is activated. In this manner, the user friendliness can be improved further.

### List of Figures

In the following, the invention is described in more detail with examples shown in the accompanying drawings in Figures 1 to 5, of which:
Figures 1A and 1B show a portable electronic device in a first position and in a second position;
Figure 2 shows a transverse cut of the portable electronic device;
Figures 3 and 4 show two diagonal cuts of the portable electronic device; and
Figure 5 illustrates an embodiment for the drive unit.

Same reference numerals refer to similar structural elements throughout the Figures.

### Detailed description

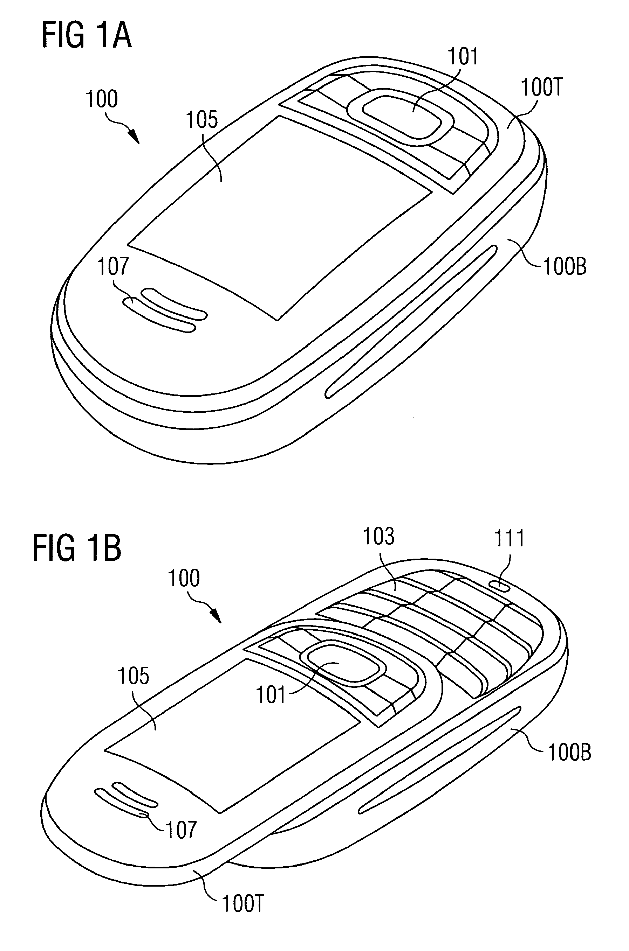

Figures 1A and 1B show a portable electronic device 100 in a first position and in a second position, respectively. The portable electronic device 100 comprises a top part 100T and a bottom part 100B. The top part 100T can be moved along the bottom part 100B between the first position and the second position. In the first position, an input section 103 is covered, and in the second position it is accessible for a user. The input section 103 may comprise a keypad, for example. Instead of or in addition to the keypad, the input section 103 may comprise a microphone inlet 111.

The top part 100T may comprise a display 105 and a loudspeaker outlet 107. Furthermore, there may be an activation switch 101 for changing the relative position of the top part 100T to the bottom part 100B between the first position and the second position.

The portable electronic device 100 further comprises a drive unit 300 adapted to move the relative position of the top part 100T to the bottom part 100B between the first position and the second position.

Figure 5 illustrates an embodiment for the drive unit 300. The drive unit 300 comprises a rotatable guiding member 301, such as a screw, that may comprise a winding and a counterpart member 303 that is adapted to convert rotational movement of the rotatable guiding member 301 to a directional, preferably linear, movement of the counterpart member 303. A motor 305 may generate the rotational movement that is passed to the rotational member 301 through a gear 309, 310 and a rotation transfer means 308, such as a gear wheel. Housing 307, shown only in part in Figure 5, may cover the gear 309, 310 and rotation transfer means 308, protecting them from being stuck because of dust or dirt.

If the portable electronic device 100 is a portable telephone, a typical use case, as illustrated in Figures 1A and 1B, would be to receive or to make a telephone call. A portable telephone may be adapted to start initiating of a telephone call, accept an incoming call, or to end an ongoing telephone call when the activation switch 101 is activated.

Preferably, the accepting, initiating, or ending of a telephone call is combined with the changing of the relative position of the top part 100T to the bottom part 100B so that when the portable telephone is closed, a telephone call is ended by pressing the activation switch 101, the drive unit 300 causes the top part 100T to move from the second to the first position. If the activation switch 101 is pressed to initiate a telephone call, e.g. for dialing a number or for selecting an entry from a phonebook stored in the portable telephone, or to accept an incoming telephone call, the drive unit 300 causes opening of the portable telephone by changing the relative position of the top part 100T to the bottom part 100B from the first to the second position.

Since during the movement there may be some noise which could be captured by the microphone inlet 111, the signal captured by the microphone during operation of the drive unit 300 may be attenuated with an attenuation filter. The attenuation filter may be implemented as a digital filter. The attenuation of the attenuation filter may be reduced upon completing the movement, i.e. the attenuation filter may be adapted to attenuate with a given attenuation only during the operation of the drive unit 300.

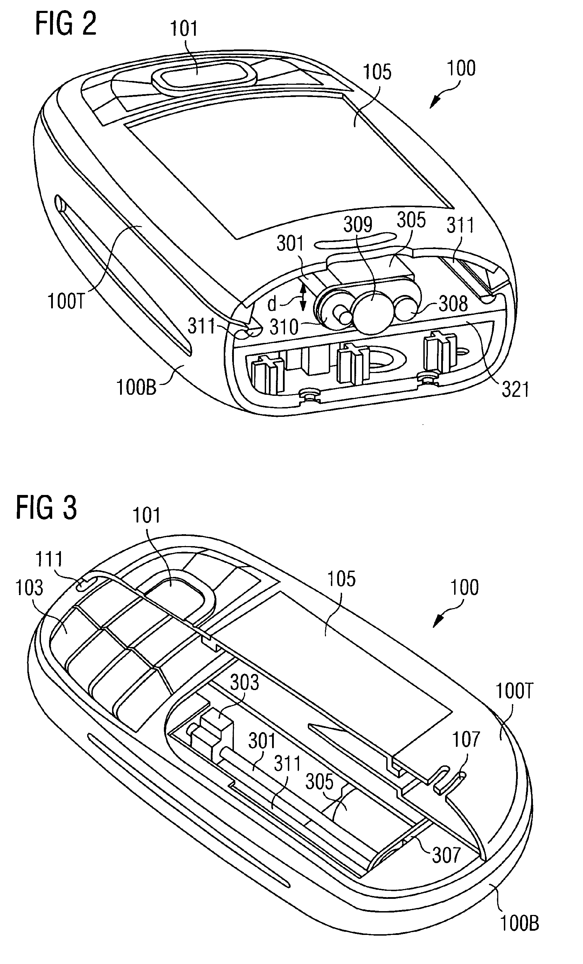

Figure 2 shows a transverse cut of the portable electronic device 100 illustrating some part of the drive unit 300. The drive unit 300 can be assembled at the bottom part 100B, such as on the PCB board 321. Then the counterpart member 303 is joined, preferably releasably, to the top part 100T. If the drive unit 300 is under the display 105, the display 105 is preferably adapted to leave an opening, height of which has been marked with reference d to Figure 2, to accommodate the drive unit 300. There may also be one or more guides 311, such as guiding rails, to ensure that the movement of the top part 100T relative to the bottom part 100B takes place in a controlled manner.

If the counterpart 303 is releasably joined to the top part 100T, or if it can be removed from the rotatable guiding means 303, the top part 100T may be easily replaced by the user. In this manner, the fact that the portable electronic device 100 now comprises a drive unit does not make it more difficult to offer exchangeable outer covers for the portable electronic device 100, the availability of which may be important especially for some customer groups.

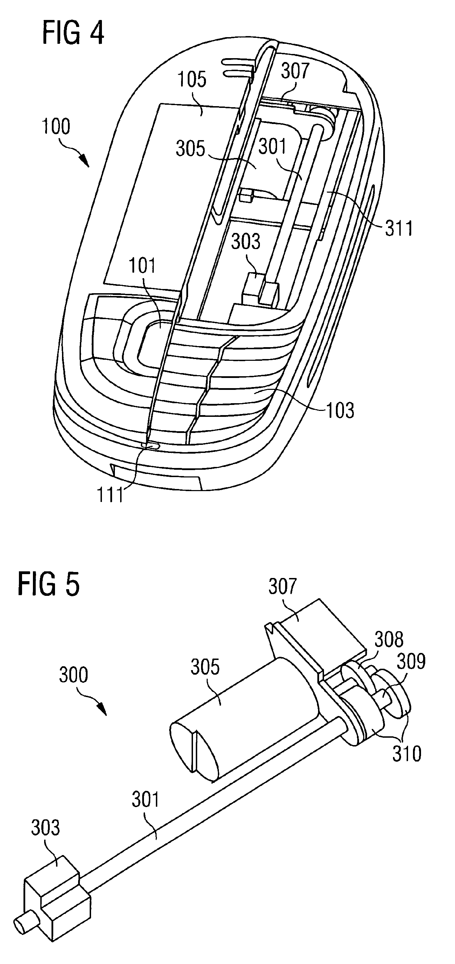

Figures 3 and 4 show two diagonal cuts of the portable electronic device 100. The counterpart member 303 may comprise a protrusion which can be fixed to the inside of the top part 100T. Because the counterpart member 303 is fixed to the top part 100T and the counterpart member 303 travels along the rotatable guiding member 301 when the rotatable guiding member 301 rotates, the relative position of the top part 100T to the bottom part 100B changes. The direction of the movement depends on the direction of rotation of the rotatable guiding means 301. If the motor 305 is a DC motor, the direction of rotation of the rotatable guiding means 301 can easily be changed by changing the sign of the voltage fed to the motor 305.

The motor 305 may be adapted to obtain its operating power from a replaceable energy source adapted to give operating power for the portable electronic device 100. In particular, if the portable electronic device 100 is a portable telephone, the replaceable energy source may correspond to the rechargeable battery of the portable telephone. The replaceable energy source can also be any other electrochemical energy cell or a bundle of such cells.

Even though the invention was described in detail by way of an example of a portable telephone, especially a cellular telephone, the skilled person appreciates that the invention is not limited to these examples but can be modified within the scope and spirit of the accompanying patent claims. The generic class of cellular telephones includes in particular GSM, CDMA, and UMTS telephones in all various frequency bands (850, 900, 1700, 1800, 1900 MHz) and in various operational modes (packet switched operation, e.g. GPRS, or circuit switched operation). Further non-exclusive examples of portable electronic devices comprise portable music players, such as CD, MP3 or DVD players, or digital cameras.

## Claims

1. A portable electronic device (100), comprising:
- a top part (100T); and
- a bottom part (100B);
**characterized in that**: the portable electronic device (100) further comprises a drive unit (300: 301-311) adapted to move the top part (100T) along the bottom part (100B) between a first position and a second position, the first position covering an input section (103), the second position making the input section (103) accessible for a user.

2. A portable electronic device (100) according to claim 1, **wherein:** the drive unit (300: 301-311) comprise:
- a motor (305) adapted to generate rotational movement; and
- a conversion unit (301, 303) adapted to convert said rotational movement to a directional movement of the top part (100T) in relation to the bottom part (100B).

3. A portable electronic device (100) according to claim 2, **wherein:** the conversion unit means (301, 303) is connected to the motor (305) via a gear (309-310).

4. A portable electronic device (100) according to claim 2 or 3 **wherein:** the conversion unit (301, 303) comprises a rotatable guiding member (301) and a counterpart member (303), the counterpart member (303) adapted to transform rotational movement of the guiding member (301) to a directional movement of the counterpart member (303).

5. A portable electronic device (100) according to claim 4, **wherein:** the rotatable guiding member (301) comprises a winding.

6. A portable electronic device (100) according to claim 4 or 5, **wherein:** the rotatable guiding member (301) is not self-locking.

7. A portable electronic device (100) according to any one of claims 4 to 6, **wherein:** the rotatable guiding member (301) is a screw.

8. A portable electronic device (100) according to any one of the preceding claims, **wherein:** said drive unit (300) is placed at the bottom part (100B) beneath the top part (100T) .

9. A portable electronic device (100) according to claim 8, **further comprising:**
- a circuit board (321) in the bottom part (100B), the drive unit (300) fixed on said circuit board (321); and
- a display (105) in the top part (100T), the display (105) adapted to leave an opening (height = d) to the circuit board (321) to accommodate the drive unit (300).

10. A portable electronic device (100) according to claim 2 or claim 2 and any one of the preceding claims 3 to 9, **wherein:** said motor (305) is adapted to obtain its operating power from a replaceable energy source adapted to give operating power for the portable electronic device (100).

11. A portable electronic device (100) according to any one of the preceding claims, **further comprising:** an activation switch (101) adapted to activate the drive unit (300) to move the top part (100T) from the first position to the second position or from the second position to the first position.

12. A portable electronic device (100) according to any one of the preceding claims, **wherein:** the portable electronic device (100) is a portable telephone, especially a cellular telephone.

13. A portable electronic device (100) according to claims 11 and 12, **wherein:** the portable electronic device (100) is adapted to initiate a telephone call or to end an ongoing telephone call when the activation switch (101) is activated.
